Europäisches Patentamt

(19) European Patent Office    (11) Numéro de publication: **0 179 713**

Office européen des brevets    **B1**

(12)    **FASCICULE DE BREVET EUROPEEN**

(45) Date de publication du fascicule du brevet: **30.05.90**    (51) Int. Cl.⁵: **G 05 D 7/06, F 02 C 7/236**

(21) Numéro de dépôt: **85402003.9**

(22) Date de dépôt: **16.10.85**

(54) Dispositif de dosage du carburant, par exemple pour une turbine à gaz.

(30) Priorité: **17.10.84 FR 8415871**

(43) Date de publication de la demande:
**30.04.86 Bulletin 86/18**

(45) Mention de la délivrance du brevet:
**30.05.90 Bulletin 90/22**

(84) Etats contractants désignés:
**DE FR GB**

(56) Documents cités:
**CH-A- 327 443**
**FR-A-2 380 585**
**GB-A-1 483 490**
**US-A-2 936 028**
**US-A-4 208 871**

(73) Titulaire: **SOCIETE NATIONALE D'ETUDE ET DE
CONSTRUCTION DE MOTEURS D'AVIATION,
"S.N.E.C.M.A."**
**2, boulevard du Général Martial Valin**
**F-75015 Paris (FR)**

(72) Inventeur: **Puillet, Raymond**
**10, rue Paul Bert**
**F-77400 Lagny (FR)**

(74) Mandataire: **Moinat, François**
**S.N.E.C.M.A. Service des Brevets Boîte Postale
81**
**F-91003 Evry Cédex (FR)**

# Description

La présente invention concerne un dispositif de dosage du carburant, par exemple pour une turbine à gaz.

Pour les turbines à gaz, et d'autres moteurs, on connaît déjà différents dispositifs de dosage du carburant, du type comportant chacun au moins un débitmètre rotatif, et des moyens pour asservir sa vitesse de rotation à une valeur de consigne du débit de carburant.

C'est ainsi que le brevet français 2 380 585 montre sur sa figure I un dispositif de régulation du débit comportant un débitmètre rotatif, auquel est accouplé un moteur électrique pas-à-pas, alimenté à partir d'un synthétiseur de fréquence et jouant le rôle d'un frein, qui applique au débitmètre rotatif un couple de freinage d'intensité réglable en fonction de la valeur de consigne du débit traversant le débitmètre. Le freinage de ce dernier fait apparaître, entre son entrée et sa sortie, une chute de pression, qui provoque des fuites internes, perturbant la précision du dosage du carburant par le débitmètre. Pour remédier à cet inconvénient, le montage illustré sur la figure 5 de ce brevet français comporte un second débitmètre, monté en série avec le premier, en aval de celuici, et adapté pour produire un signal de réaction, qui est envoyé au circuit de commande du moteur-frein. Un tel dispositif est évidemment coûteux, encombrant et relativement peu fiable, ce qui en exclut pratiquement l'utilisation pour doser le carburant d'une turbine à gaz de véhicule aérien.

Le brevet des Etats-Unis d'Amérique 4 208 871 décrit également un système de dosage du carburant, qui comprend une pompe volumétrique, utilisée en débitmètre, et entraînée en rotation par un moteur électrique à vitesse variable, grâce à un circuit électronique de commande, intégrant les différents paramètres dont dépend la valeur de consigne du débit. Un régulateur de pression est monté entre l'entrée et la sortie de la pompe volumétrique de façon à maintenir sensiblement constante la chute de pression correspondante.

Le brevet des Etats-Unis d'Amérique 3 738 104 décrit également un système de dosage du carburant pour une turbine à gaz, qui comprend notamment un débitmètre rotatif, et deux tachymètres, produisant des signaux qui servent, avec un signal de commande du débit, tenant compte des différents paramètres de la turbine, à ajuster une servo-valve, insérée dans un circuit de dérivation d'une fraction réglable du débit de carburant envoyé dans le débitmètre. Il convient de remarquer que, dans ce système antérieur, le débitmètre n'a aucune fonction de dosage, cette dernière fonction étant assurée par un ensemble complexe de tachymètres, de circuits électroniques et de servo-valve.

Le brevet britannique 1 483 490 décrit un système de dosage du carburant pour une turbine à gaz, qui comprend une pompe centrifuge en serie avec une pompe volumétrique. La pompe volumétrique, par exemple une pompe à palettes, est entraînée par un moteur électrique, dont la vitesse est elle-même réglée par un circuit électronique en fonction des différents paramètres de la turbine. Pour une vitesse de rotation suffisante de la pompe centrifuge, la pompe volumétrique fonctionne en débitmètre doseur, entre l'entrée et la sortie duquel une vanne de régulation maintient une chute de pression constant.

Le but principal de la présente invention est de perfectionner un dispositif de dosage du carburant, du type connu, indiqué précédemment, de façon à éliminer le plus possible les pannes susceptibles d'affecter l'un ou l'autre des différents composants du dispositif et d'en perturber le fonctionnement, afin notamment d'accroître la fiabilité ainsi que la précision du dispositif de dosage. Le dispositif de dosage du carburant selon la présente invention comporte également au moins un débitmètre rotatif et des moyens pour asservir sa vitesse de rotation à une valeur de consigne du débit de carburant; il est caractérisé en ce qu'il comporte deux débitmètres rotatifs, dont les circuits de carburant sont montés en parallèle, deux tachymètres et deux générateurs de couples, accouplés respectivement aux débitmètres rotatifs, ainsi qu'un circuit de régulation, dont les entrées reçoivent respectivement les signaux des tachymètres et la valeur de consigne du débit total, et qui est adapté pour envoyer, en parallèle, aux deux générateurs de couples, un signal d'écart, dépendant de la somme des vitesses de rotation des deux débitmètres.

Les avantages du dispositif de dosage du carburant selon la présente invention, à deux débitmètres rotatifs, sur ceux qui n'en comportent qu'un seul, ne se réduisent pas aux avantages qui résultent du doublement, dans une même installation, des composants de haute précision, généralement fragiles. En effet, l'application du principe banal dit de "redondance" à un dispositif de dosage du carburant consisterait simplement à maintenir l'un des deux débitmètres en circuit, et l'autre débitmètre, hors circuit, jusqu'à ce qu'une panne affecte le premier débitmètre ou encore le tachymètre ou le générateur de couples qui lui est associé, une commutation sur le second débitmètre permettant alors d'éliminer le débitmètre dont la fonction de dosage est perturbée, et cela sans interrompre le dosage et la distribution du carburant. Dans le cas, au contraire, du dispositif selon la présente invention, les deux débitmètres fonctionnent la plupart du temps en parallèle, même si une panne affecte la précision du premier, en réduisant par exemple sa vitesse de rotation, le second débitmètre compensant, par exemple par son accélération, la contribution du premier débitmètre au débit total de carburant. Bien entendu, toute panne sévère affectant l'un des deux débitmètres, qui fonctionnent en parallèle, se traduit également par la mise hors circuit de ce débitmètre, comme dans le cas de la redondance simple, correspondant au fonctionnement alterné des deux débitmètres.

Les générateurs de couples qui sont associés aux débitmètres du dispositif selon la présente invention peuvent être, de façon connue en soi, soit des moteurs à vitesse réglable, produisant des couples d'entraînement ou d'accélération, soit des freins, tels que des moteursfreins, produisant des couples de freinage. Dans les deux cas, des moyens doivent être prévus, selon la présente invention, pour réguler la différence entre les pressions en amont et en aval des débitmètres rotatifs, à une valeur sensiblement nulle dans le cas où les générateurs de couples sont des moteurs, et à une valeur constante, de préférence faible, lorsque les générateurs de couples sont des freins.

Dans une forme de réalisation préférée du dispositif de dosage du carburant selon la présente invention, une vanne d'arrêt est montée à l'entrée de chaque débitmètre, et des moyens, commandés par le circuit de régulation, sont prévus pour, si la vitesse de l'un des débitmètres est très supérieure à celle de l'autre, fermer la vanne d'arrêt associée à ce débitmètre si le débit total est très supérieur à sa valeur de consigne, ou bien fermer la vanne d'arrêt associée à l'autre débitmètre si le débit total est très inférieur à sa valeur de consigne.

Grâce à cette disposition selon la présente invention, c'est seulement si le débit total $D = D1 + D2$, sortant des deux débitmètres, est très différent de sa valeur de consigne Dr, que la décision est prise de mettre hors circuit l'un des deux débitmètres; cette décision n'est cependant pas la même selon que l'écart des vitesses, $n1 - n2$, du premier et du second débitmètres est très supérieur ou très inférieur à zéro. En effet, si $n1$ est très supérieure à $n2$ et que D soit également très supérieure à Dr, c'est qu'il y a eu rupture du frein associé au premier débitmètre, qui doit être alors mis hors circuit par fermeture de la vanne d'arrêt correspondante; par contre, si, pour le même écart des vitesses, D est très inférieur à Dr, c'est parce que le signal produit par le tachymètre associé au second débitmètre a subi une très forte atténuation, due par exemple à des courts-circuits dans les circuits de transmission, si bien que c'est alors le second débitmètre qui doit être mis hors circuit. Les situations rencontrées sont évidemment symétriques si c'est la vitesse du second débitmètre qui est très supérieure à celle du premier.

Lorsque les débitmètres rotatifs du dispositif selon la présente invention sont des compteurs volumétriques, de type connu, les moyens pour réguler la différence entre les pressions en amont et en aval des débitmètres comportent un premier régulateur, comprenant une soupape régulatrice, montée en parallèle avec l'entrée commune des débitmètres, et un capteur de différence de pression, commandant ladite soupape régulatrice.

Cependant, dans une forme de réalisation préférée de l'invention, les moyens pour réguler la différence de pression comportent en outre un second régulateur, dont la soupape régulatrice est montée en série avec celle du premier régulateur, et un troisième régulateur, dont la soupape régulatrice est montée en parallèle avec celles des premier et second régulateurs.

Avec cette disposition selon la présente invention, si l'une ou l'autre des soupapes régulatrices montées en série est bloquée à l'ouverture, c'est l'autre soupape, exempte de panne, qui assure à elle seule la régulation de la différence de pression; si par contre, l'une au moins des deux soupapes régulatrices montées en série est bloquée à la fermeture, c'est la soupape montée en parallèle avec les deux premières et normalement fermée, qui s'ouvre et assure à elle seule la régulation. Cette disposition, assortie des contrôles périodiques nécessités par toute redondance, est particulièrement avantageuse dans la mesure où elle permet de maintenir, d'une façon parfaitement sûre, la différence de pression à une valeur faible ou nulle, et, par suite, de réduire au minimum les fuites internes des débitmètres, qui seraient susceptibles d'affecter leur précision.

A titre d'exemple, on a décrit ci-dessous et illustré schématiquement au dessin annexé, une forme de réalisation d'un dispositif de dosage du carburant pour une turbine à gaz, selon la présente invention.

La figure 1 illustre schématiquement l'ensemble d'une installation d'alimentation d'un injecteur de carburant d'une turbine à gaz, comprenant une forme de réalisation d'un dispositif de dosage du carburant selon la présente invention.

La figure 2 est le schéma logique d'une forme de réalisation électronique du circuit de régulation de la figure 1.

La figure 3 est un diagramme destiné à expliquer le fonctionnement de l'installation de la figure 1.

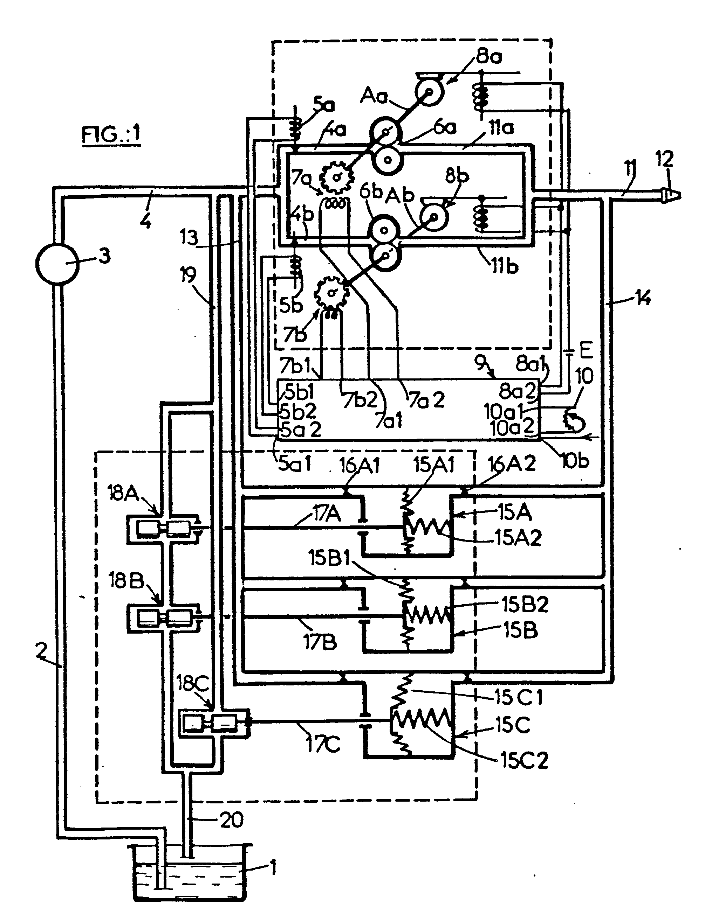

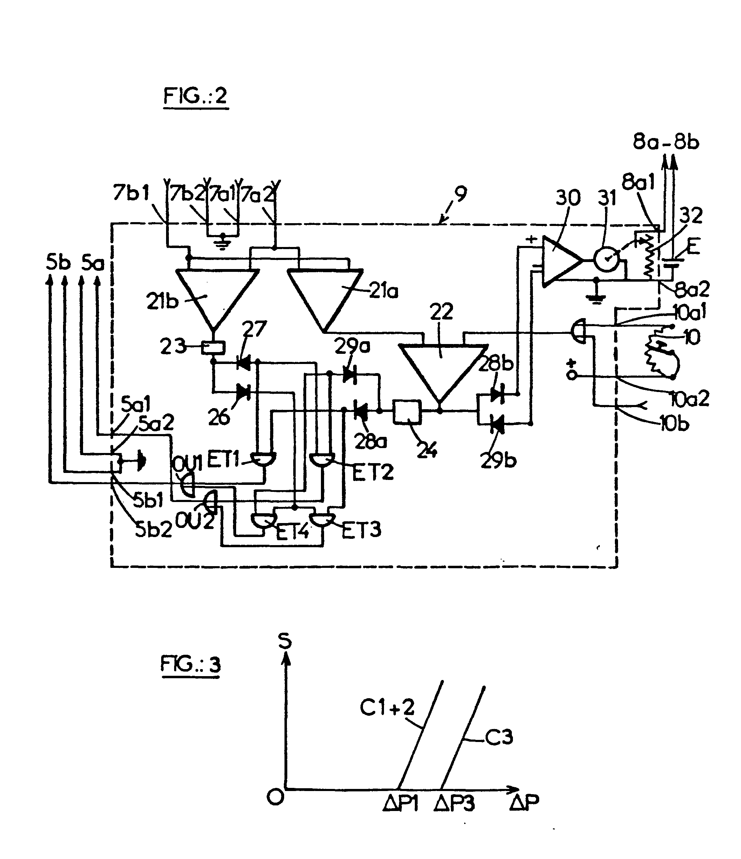

Sur la figure 1, on a désigné par 1 une cuve de carburant, dans laquelle plonge le tuyau d'aspiration 2 d'une pompe 3, d'un type approprié, ici volumétrique. Le tuyau de refoulement 4 de la pompe 3 se divise en deux branches, 4a et 4b, dans chacune desquelles est insérée une électro-vanne d'arrêt, 5a ou 5b, et qui aboutit à l'entrée d'un débitmètre rotatif, du type volumétrique, 6a ou 6b. Les deux débitmètres volumétriques 6a et 6b sont de préférence identiques et sont constitués chacun par exemple par un moteur à engrenages, une pompe à palettes ou à pistons 01etc. Sur l'axe, Aa ou Ab, de chacun des débitmètres rotatifs, 6a et 6b, est calé, d'une part, le rotor d'un tachymètre, 7a ou 7b, et d'autre part, le rotor d'un moteur-frein électrique, 8a ou 8b. Les deux tachymètres, 7a et 7b, qui sont de préférence identiques, peuvent être d'un type approprié quelconque, par exemple une dynamo tachymétrique, dans l'enroulement statorique duquel apparaît une force électromotrice qui est par exemple proportionnelle à la vitesse de rotation du débitmètre volumétrique correspondant, et par suite au débit de carburant qui le traverse. Dans l'exemple de réalisation illustré sur la figure 1, les enroulements statoriques des deux dynamos tachymétriques 7a et 7b sont connectés respectivement aux entrées 7a1, 7a2 et 7b1, 7b2 d'un circuit électronique de régulation, 9, qui, sur la figure 1, a été représenté sous la forme d'une boîte noire; une forme de réalisation électronique particulière de ce circuit de régulation 9 sera décrite ultérieurement avec la figure 2.

Il suffit pour l'instant d'indiquer que le circuit de régulation 9 comporte encore des entrées 10a1 et 10a2, auxquelles est branché un dispositif d'affichage de la valeur de consigne du débit de carburant, à commande manuelle, par exemple un simple rhéostat 10, ainsi qu'une entrée 10b, pour un ou plusieurs signaux provenant de capteurs -non représentés- des différents paramètres de fonctionnement de la turbine à gaz -également non représentée- qui doivent influencer la valeur de consigne du débit de carburant. D'autre part, le circuit de régulation 9 comporte deux paires de sorties, 5a1-5a2 et 5b1-5b2, qui sont connectées respectivement aux enroulements de commande des électro-vannes 5a et 5b, ainsi qu'une paire de sorties, 8a1-8a2, qui sont connectées en parallèle aux enroulements statoriques des moteurs-freins 8a et 8b respectivement.

Les conduites de sortie 11a et 11b des débitmètres volumétriques 6a et 6b convergent dans une conduite unique 11, servant à l'alimentation d'un injecteur 12, ou d'une rampe d'injecteurs de la turbine à gaz.

Deux conduites 13 et 14 sont montées en dérivation sur les conduites 4 et 11 respectivement, en amont du point de bifurcation de la conduite 4 et en aval du point de convergence des conduites 11a et 11b. Trois capteurs de différence de pression, 15A à 15C, par exemple du type à membrane 15A1, chargée par un ressort 15A2, sont montés en parallèle entre les deux conduites 13 et 14; des diaphragmes, tels que 16A1 et 16A2, sont montés aux deux entrées de chaque capteur de différence de pression, tel que 15A. Les membranes, telles que 15A1, des trois capteurs de différence de pression, tels que 15A, sont accouplées, par l'intermédiaire de tiges rigides telles que 17A, aux pistons respectifs de trois soupapes régulatrices 18A à 18C; la première et la seconde soupapes régulatrices, 18A et 18B, sont montées en série l'une avec l'autre entre une conduite 19, piquée en dérivation sur la conduite 4, d'une part, et une conduite de décharge 20, aboutissant dans la cuve de carburant 1, d'autre part; la troisième soupape régulatrice 18C est montée en parallèle avec les deux premières soupapes régulatrices, 18A et 18B.

La figure 3 est un diagramme représentant les caractéristiques de régulation des trois régulateurs 15A-18A, 18B-18B et 15C-18C, respectivement; en abscisses de ce diagramme de la figure 3, on a porté la différence, $\triangle P$, entre la pression en amont des débitmètres volumétriques, 6a et 6b, qui règne par exemple dans les conduites 4, 13 et 19, et la pression en aval des débitmètres 6a et 6b, qui règne dans les conduites 11 et 14, tandis que, en ordonnées, on a porté la section d'ouverture S de l'un des régulateurs mentionnés. La courbe C1 + 2, qui est voisine d'une droite à forte pente positive, correspond aux caractéristiques de régulation, sensiblement identiques l'une à l'autre, des deux premiers régulateurs, 15A-18A et 15B-18B; la courbe C3, qui est une droite sensiblement parallèle à C1 + 2, mais décalée vers les plus grandes valeurs de ou

$\triangle P$, est la caractéristique de régulation du troisième régulateur 15C-18C.

L'installation d'alimentation d'un ou plusieurs injecteurs, selon la présente invention qui vient d'être décrite à l'aide de la figure 1, fonctionne de la façon suivante.

Lorsque les deux débitmètres volumétriques 6a et 6b, identiques l'un à l'autre, sont en outre dans des états de fonctionnement normaux, donc aussi pratiquement identiques l'un à l'autre, le débit de carburant que la pompe 3 envoie dans le tuyau 4 est réparti en deux fractions égales à travers les deux débitmètres 6a et 6b, les vannes d'arrêt 5a et 5b étant ouvertes. Le circuit de régulation 9 reçoit, sur ses deux paires d'entrées, 7a1-7a2 et 7b1-7b2, des tensions pratiquement égales, dont il fait la somme, qu'il multiplie par un facteur constant, pour obtenir le débit total traversant les deux débitmètres 6a et 6b, et il compare ce débit total à la valeur de consigne reçue sur sa paire de bornes d'entrées 10a1-10a2, et éventuellement influencée par les signaux arrivant sur son entrée 10b. Si le débit total D, déterminé par le circuit régulateur 9, est supérieur à sa valeur de consigne Dr, ledit circuit de régulation 9 transmet une tension électrique d'écart, proportionnelle à la différence (D-Dr), à ses sorties 8a1-8a2, qui transmettent en parallèle cette même tension aux enroulements statoriques des deux moteurs-freins 8a et 8b, de façon que ceux-ci exercent sur les axes Aa et Ab des deux débitmètres rotatifs 6a et 6b des couples de freinage tendant à réduire leurs vitesses de rotation respectives, et par suite le débit total qui les traverse, jusqu'à ce que celui-ci ait atteint la valeur de consigne Dr; à cet instant, la tension d'écart appliquée aux sorties 8a1 et 8a2 se stabilise de sorte que les moteurs-freins 8a-8b exercent ensuite des couples de freinage constants.

Dans le fonctionnement normal, qui vient d'être décrit, les deux débitmètres rotatifs 6a et 6b fonctionnent en moteurs sous l'effet de la surpression aval $\triangle P$, qui est maintenue constante, et de préférence à une valeur faible, par les trois régulateurs tels que 15A-18A. Cette limitation de la surpression amont a d'abord l'avantage de limiter la vitesse de rotation de chacun des deux débitmètres rotatifs 6a et 6b, et par suite la puissance des moteurs-freins, 8a et 8b, qui leur sont respectivement associés; en effet, pour pouvoir obtenir éventuellement des débits très faibles, il faut que les moteurs-freins 8a, 8b aient des puissances de freinage maximales très peu inférieures à la puissance des débitmètres volumétriques, fonctionnant en moteurs, laquelle puissance dépend de $\triangle P$. Un autre avantage de la limitation de $\triangle P$ à une faible valeur réside dans la réduction des fuites internes des débitmètres 6a et 6b, et par suite dans un accroissement de leur précision dans l'exercice de leurs fonctions de mesure et de dosage du débit.

Les deux débitmètres, 6a et 6b, fonctionnant normalement au même régime, si, pour une raison quelconque, la vitesse de rotation de l'un d'eux, par exemple de 6a, vient à diminuer, il en est de même du débit total D et, par suite, de sa valeur calculée dans le circuit de régulation 9, qui devient inférieure à la valeur de consigne Dr. La tension d'écart, alors par exemple négative, que les bornes de sortie 8a1 et 8a2 du circuit de régulation 9 appliquent en parallèle aux enroulements statoriques des deux moteurs-freins 8a et 8b, tend à réduire les couples de freinage qu'ils produisent, et par suite à accélérer simultanément les deux débitmètres 6a et 6b; cependant, si les causes de la chute de régime du débitmètre 6a sont de nature à limiter sa vitesse de rotation à une faible valeur, indépendante du couple de freinage qui lui est appliqué par le moteur-frein 8a, seul le débitmètre 8b va s'accélérer en raison de la réduction du couple de freinage que lui applique le moteur-frein 8b, et son accélération ne cessera que lorsque la valeur du débit, calculée dans le circuit de régulation 9, et proportionnelle à la somme des vitesses de rotation des deux débitmètres 6a et 6b, aura repris la valeur de consigne, Dr, en raison de l'unique accroissement de la vitesse de rotation du débitmètre 6b.

Dans une forme de réalisation particulière de l'invention, le circuit électronique de régulation 9 peut être réalisé de la façon suivante: si l'un des deux débitmètres, par exemple 6a, cesse de tourner, par exemple pour une raison purement mécanique, et si sa vitesse, mesurée par le tachymètre 7a, s'annule, de même que la tension transmise à la paire de bornes d'entrée 7a1-7a2 dudit circuit 9, celui-ci transmet, par sa paire de bornes de sortie, 5a1-5a2, une tension d'excitation à l'électrovanne 5a, qui est ainsi commandée pour fermer la conduite 4a aboutissant au débitmètre défaillant, 6a. Dans ce cas, comme on l'a expliqué précédemment, c'est le débitmètre 6b qui va être accéléré par la réduction du couple produit par le moteur-frein 8b, jusqu'à atteindre une vitesse pour laquelle il envoie dans la conduite 11 un débit D égal à la valeur de consigne Dr; ceci suppose évidemment que chacun des deux débitmètres 6a et 6b présente une capacité -en débit- adaptée à la valeur maximale de consigne du débit des injecteurs tels que 12.

Le triplement des régulateurs de la différence de pression $\triangle P$, tels que 15A-18A, a le rôle suivant: si l'une ou l'autre des soupapes régulatrices 18A ou 18B, montées en série l'une avec l'autre, se trouve être bloquée en position d'ouverture, c'est l'autre soupape régulatrice, non bloquée, qui assure la régulation de $\triangle P$ pour des valeurs de $\triangle P$ au moins égales et généralement peu supérieures à $\triangle P1$ (voir le diagramme de la figure 3).

Par contre, si l'une des première et seconde soupapes régulatrices, 18A et 18B, est bloquée en position de fermeture, c'est la troisième soupape régulatrice, 18C, normalement fermée, qui s'ouvre et assure la régulation de $\triangle P$, pour des valeurs, au moins égales et généralement peu supérieures à $\triangle P3$ (figure 3); dans tous les cas, la différence de pression $\triangle P$ est donc régulée à une valeur égale ou peu supérieure à $\triangle P1$, l'intervalle de régulation pouvant être aisément très réduit. Il est évident que l'intervalle de régulation de $\triangle P$

dépend de la raideur des ressorts tels que 15A2 et des membranes telles que 15A1 (figure 1). Les diaphragmes, tels que 16A1 et 16A2, servent à limiter les conséquences qu'aurait par exemple une fuite importante au niveau de la membrane, telle que 15A1, du capteur de différence de pression, tel que 15A.

On va maintenant décrire, à l'aide de la figure 2, une forme de réalisation, électronique, du circuit de régulation qui a été désigné par 9 sur la figure 1, cette forme de réalisation étant susceptible d'assurer des fonctions de sécurité, notamment en cas de panne de l'un des composants de l'installation de la figure 1, plus variées que celles précédemment indiquées.

La forme de réalisation illustrée sur la figure 2 est telle que les différentes entrées du circuit de régulation 9 reçoivent, et ses différentes sorties produisent, des tensions électriques analogiques, et même généralement continues; comme, cependant, la plupart des unités constituant le circuit électronique 9 ont été représentées sous la forme de symboles, toutes ces unités, ou tout au moins certaines d'entre elles, pourraient fonctionner en numérique; cette dernière possibilité serait compatible avec l'utilisation, dans l'installation de la figure 1, de composants électriques produisant, ou commandés par des signaux analogiques, à condition de prévoir des convertisseurs analogique — numérique aux entrées du circuit 9 et des convertisseurs numérique — analogique à ses sorties. Cependant, ces convertisseurs pourraient être supprimés, à condition de choisir des composants électriques, pour l'installation de la figure 1, susceptibles de produire ou d'être commandés par des signaux numériques, éventuellement par l'intermédiaire de convertisseurs analogique —numérique ou numérique — analogique, associés aux différents composants. Pour ces raisons, la structure et le fonctionnement du circuit de régulation de la figure 9 vont être décrits sans faire référence à la nature analogique ou numérique des signaux traités.

Sur la figure 2, les triangles désignent des amplificateurs opérationnels, à deux entrées, qui, selon leur montage et leur alimentation (non représentés en détail), forment la somme ou la différence des deux signaux d'entrée. C'est ainsi que les amplificateurs opérationnels 21a et 21b reçoivent, sur leurs deux entrées, les signaux correspondants aux vitesses $n_a$ et $n_b$ des débitmètres 6a et 6b, dont le premier, 21a, forme la somme et la multiplie par une constante K telle que $K(n_a + n_b) = D$, débit total des débitmètres 6a et 6b. L'amplificateur opérationnel 21b forme par contre la différence $(n_a — n_b)$. L'amplificateur opérationnel 22 reçoit, sur une entrée, D, et sur son autre entrée, la valeur de consigne Dr, qui lui arrive du dispositif d'affichage 10, avec éventuellement une modulation par des paramètres arrivant par l'entrée 10b. Les tensions de sortie des amplificateurs opérationnels 21b et 22, qui sont respectivement proportionnels à $(n_a — n_b)$ et à $(D Dr)$, sont appliquées respectivement à des circuits à seuil, 23 et 24, qui, seulement lorsque les tensions appliquées à leurs entrées dépassent des seuils prédéterminés, produisent sur leurs sorties respectives des tensions de mêmes polarités que lesdites tensions d'entrée. Les tensions de sortie des circuits à seuil 23 et 24 sont aiguillées, en fonction de leur polarité, par exemple par des diodes de polarités opposées, 26, 27, 28a et 29a, et appliquées aux entrées de quatre circuits logiques du type ET, qui ont été désignés par ET1 à ET4. Les signaux de sortie des circuits logiques ET1 et ET4 sont appliqués en parallèle, grâce à un circuit logique du type OU, désigné par OU1, à la borne de sortie 5b2 du circuit 9; de même, les signaux de sortie des circuits logiques ET2 et ET3 sont transmis en parallèle, par l'intermédiaire d'un circuit logique OU2, à la borne de sortie 5a1 du circuit 9; les deux autres bornes de sortie, 5a2 et 5b1, sont par exemple mises à la masse. D'autre part, la tension de sortie de l'amplificateur opérationnel 22, qui est proportionnelle à (D-Dr), est aiguillée, par des diodes de polarités opposées, 28b et 29b, vers l'une ou l'autre des deux entrées, polarisées l'une positivement (+) et l'autre négativement (−), d'un amplificateur opérationnel 30, dont la sortie attaque un servo-moteur 31, ayant son axe accouplé au curseur d'un potentiomètre 32 du type rotatif; l'une des extrémités du potentiomètre 32 est connectée à la borne de sortie 8a2 du circuit 9, et son point variable à la borne de sortie 8a1; enfin, on a désigné par E une source de tension continue qui est connectée entre la sortie 8a2 du circuit 9 et les enroulements statoriques, montés en parallèle, des moteurs-freins 8a et 8b; la valeur de la tension produite par la source E est choisie de telle sorte que le couple maximum produit par chacun des moteurs-freins 8a et 8b, lorsque le potentiomètre 32 a sa valeur minimale, pratiquement nulle, correspond pratiquement à l'arrêt de chacun des débitmètres 5a et 5b, et par suite a un débit total pratiquement nul.

Le circuit de régulation 9 qui vient d'être décrit à l'aide de la figure 2 fonctionne de la façon suivante:

Lorsque la tension de sortie de l'amplificateur opérationnel 22, qui est proportionnelle à (D—Dr), est positive ou négative, elle est aiguillée, par la diode 28b ou la diode 29b, vers l'entrée + ou l'entrée − de l'amplificateur opérationnel 30, sur la sortie de laquelle il apparaît une tension continue, par exemple positive ou négative, dont l'amplitude est sensiblement proportionnelle à la différence (D—Dr). Selon sa polarité, cette tension fait tourner le servo-moteur 31 soit dans le sens qui correspond à un accroissement de la résistance variable du potentiomètre 32, soit dans celui qui correspond à sa diminution, ce qui a pour effet de diminuer ou d'accroître la fraction de la tension d'alimentation E, appliquée en parallèle aux enroulements statoriques des moteurs-freins 8a et 8b. Il y a par suite réduction ou accroissement des couples de freinage appliqués aux débitmètres correspondants, 6a et 6b, et par suite, accroissement ou diminution du débit total D, jusqu'à ce que, pour D = Dr, la tension de sortie de l'amplificateur opérationnel 30 s'annule, et le servo-moteur 31 cesse de tourner.

D'autre part, si la vitesse de l'un des débitmètres 6a et 6b, par exemple celle, $n_a$ du premier, devient très supérieure à l'autre, $n_b$, la tension positive qui apparaît à la sortie du circuit à seuil 23 est transmise par la diode 26 aux premières entrées des deux circuits logiques ET3 et ET4; si, en outre, au même instant, ou peu après, le débit total D est très supérieur à sa valeur de consigne, Dr, la tension positive qui apparaît à la sortie du circuit à seuil 24 est transmise par la diode 28a, à la seconde entrée du circuit ET3, dont la sortie applique par suite une tension de commande à l'électrovanne 5a, de façon à provoquer sa fermeture et à isoler ainsi le débitmètre 6a, qui tourne à une vitesse excessive. En effet, ceci ne peut être dû qu'à une rupture du frein correspondant, 8a. Si par contre la tension de sortie du circuit à seuil 24 est négative, c'est-à-dire si le débit total D est très inférieur à sa valeur de consigne Dr, cette tension négative est appliquée à la seconde entrée du circuit ET4, dont la sortie applique par suite une tension de commande de la fermeture à l'électrovanne 5b, de manière à isoler le débitmètre 6b, tournant à la vitesse la plus faible. En effet, la réduction considérable de la valeur du débit D calculée par l'amplificateur opérationnel 21a, est vraisemblablement due, dans ce cas, à une atténuation exagérée du signal que le tachymètre 7b applique aux bornes d'entrées 7b1 et 7b2 du circuit de régulation 9, cette atténuation étant due éventuellement à un court-circuit dans la ligne de transmission correspondante, ou bien dans le tachymètre lui-même. Il est donc judicieux que, dans ce cas, soit mis hors service le débitmètre 6b dont la vitesse exacte ne peut plus être transmise au circuit de régulation 9.

Si c'était par contre la vitesse du débitmètre 6b qui devenait très supérieure à celle du débitmètre 6a, des raisonnements analogues, faisant intervenir les circuits ET1 et ET2, montreraient que la vanne d'arrêt, associée au débitmètre 6b, serait fermée si D était alors très supérieur à Dr, alors que la vanne d'arrêt, associée à l'autre débitmètre 6a, serait fermée si D était alors très inférieur à Dr.

La présente invention n'est pas limitée aux formes de réalisation précédemment décrites. Elle englobe toutes leurs variantes, dont quelques-unes seulement vont être indiquées ci-après, à titre d'exemples non limitatifs.

Les diaphragmes tels que 16A1 et 16A2 sont facultatifs. Il en est de même du triplement des régulateurs 15A-18A à 15C-18C, dont un seul pourrait être prévu. La réalisation des soupapes régulatrices, telles que 18A, et des capteurs de différence de pression, tels que 15A, sont matières à option. Alors que les soupapes régulatrices telles que 18A sont avantageusement montées en parallèle sur la conduite de refoulement 4 de la pompe 3, si celle-ci est une pompe volumétrique, lesdites soupapes régulatrices peuvent être disposées différemment dans le cas de pompes d'autres types, par exemple d'une pompe centrifuge. Comme on l'a déjà indiqué, le circuit de régulation 19 est susceptible de réalisations diverses, permettant notamment d'assurer des fonctions de sécurité diverses, par la commande de la fermeture des électro-vannes 5a et 5b. Au lieu d'un circuit électronique de régulation, on pourrait prévoir un circuit équivalent, à fonctionnement entièrement, ou seulement partiellement hydraulique ou pneumatique. Au lieu d'utiliser des moteurs-freins comme générateurs de couples de freinage, on peut utiliser d'autres types connus de freins, notamment des freins électromagnétiques, fonctionnant à poudre magnétique ou par courants de Foucault... etc. D'autres types de freins, par exemple à commande pneumatique ou hydraulique, pourraient également être envisagés. Il serait aussi possible de remplacer les moteurs-freins 8a et 8b respectivement par des moteurs, notamment des moteurs électriques, alimentés comme les moteurs-freins de la figure 1. Dans ce cas, le ou les régulateurs de la différence de pression $\triangle P$ devraient être réglés de manière que la différence de pression $\triangle P$ s'écarte toujours peu de la valeur nulle. Les dynamos tachymétriques 7a et 7b peuvent être remplacées par tous autres capteurs de vitesse, appropriés. Enfin, le dispositif de dosage du carburant selon la présente invention est applicable à des moteurs, mobiles ou stationnaires, les plus divers.

## Revendications

1. Dispositif de dosage du carburant, par exemple pour une turbine à gaz, comportant au moins un débitmètre rotatif, et des moyens pour asservir sa vitesse de rotation à une valeur de consigne du débit de carburant, caractérisé en ce qu'il comporte deux débitmètres rotatifs (6a, 6b), dont les circuits de carburant sont montés en parallèle, deux tachymètres (7a, 7b) et deux générateurs de couples (8a, 8b), accouplés respectivement aux débitmètres rotatifs (6a, 6b), et un circuit de régulation (9), dont les entrées reçoivent respectivement les signaux des tachymètres (7a, 7b) et la valeur de consigne (Dr) du débit total (D), et qui est adapté pour envoyer en parallèle aux deux générateurs de couples (8a, 8b) un signal d'écart, dépendant de la somme des vitesses de rotation des deux débitmètres (6a, 6b).

2. Dispositif selon la revendication 1, caractérisé en ce que les générateurs de couples (8a, 8b) sont des moteurs à vitesse réglable, et que des moyens sont prévus pour réguler à une valeur sensiblement nulle la différence ($\triangle P$) entre les pressions en amont et en aval des débitmètres rotatifs (6a, 6b).

3. Dispositif selon la revendication 1, caractérisé en ce que les générateurs de couples (8a, 8b) sont des freins, tels que des moteurs-freins, et que des moyens sont prévus pour réguler à une valeur sensiblement constante, et de préférence faible, la différence ($\triangle P$) entre les pressions en amont et en aval des débitmètres rotatifs (6a, 6b).

4. Dispositif selon l'une quelconque des revendications 1 à 3, caractérisé en ce qu'une vanne d'arrêt (5a, 5b) est montée à l'entrée de chaque débitmètre (6a, 6b), et que des moyens, commandés par le circuit de régulation (9), sont prévus pour, si la vitesse de l'un des débitmètres (6a ou 6b) est très supérieure à celle de l'autre (6b ou 6a), fermer la vanne d'arrêt (5a ou 5b) associée à ce débitmètre (6a ou 6b) si le débit total (D) est très supérieur à sa valeur de consigne (Dr), ou bien fermer la vanne d'arrêt (5b ou 5a) associée à l'autre débitmètre (6b ou 6a) si le débit total (D) est très inférieur à sa valeur de consigne (Dr).

5. Dispositif selon l'une quelconque des revendications 2 à 4, caractérisé en ce que les débitmètres rotatifs (6a, 6b) sont des compteurs volumétriques, et que les moyens pour réguler la différence ($\triangle P$) entre les pressions en amont et en aval des débitmètres (6a, 6b) comportent au moins un premier régulateur, comprenant une soupape régulatrice (18A), montée en dérivation ou en série, selon le type de pompe d'alimentation utilisée, sur l'entrée commune des débitmètres (6a, 6b), et un capteur de différence de pression (15A), commandant ladite soupape régulatrice (18A).

6. Dispositif selon la revendication 5, caractérisé en ce que les moyens pour réguler la différence de pression comporte en outre un second régulateur, dont la soupape régulatrice (18B) est montée en série avec celle (18A) du premier régulateur, et un troisième régulateur, dont la soupape régulatrice (18C) est montée en parallèle avec celles (18A, 18B) des premier et second régulateurs.

7. Dispositif selon la revendication 6, caractérisé en ce que le premier et le second régulateurs présentent des caractéristiques de régulation (C1 + 2) pratiquement identiques, et que le troisième régulateur présente une caractéristique de régulation (C3), décalée vers les plus grandes valeurs de la différence de pression ($\triangle P$) par rapport aux caractéristiques (C1 + 2) desdits premier et second régulateurs.

8. Dispositif selon l'une quelconque des revendications 5 à 7, caractérisé en ce que des diaphragmes (16A1, 16A2) sont montés aux deux entrées de chaque capteur (15A) de différence de pression ($\triangle P$).

## Patentansprüche

1. Vorrichtung zur Kraftstoffdosierung, z.B. für eine Gasturbine, mit wenigstens einem rotierenden Durchflußmesser sowie mit Mitteln zur Regelung seiner Drehgeschwindigkeit auf einen Sollwert für den Kraftstoffdurchfluß, gekennzeichnet durch

zwei rotierende Durchflußmesser (6a, 6b), deren Kraftstoffkreise parallel angeordnet sind,

zwei Geschwindigkeitsmesser (7a, 7b),

zwei Drehmomenterzeuger (8a, 8b), die mit jeweils einem der rotierenden Durchflußmesser (6a, 6b) gekuppelt sind

und eine Regelschaltung (9) mit Eingängen, die die Signale der Geschwindigkeitsmesser (7a, 7b) und den Sollwert (Dr) des Gesamtdurchflusses (D) aufnehmen,

wobei die Regelschaltung (9) so ausgebildet ist, daß sie den beiden Drehmomenterzeugern (8a, 8b) ein von der Summe der Drehgeschwindigkeiten der beiden Durchflußmesser (6a, 6b) abhängiges Abweichungssignal zuführt.

2. Vorrichtung nach Anspruch 1, dadurch gekennzeichnet, daß die Drehmomenterzeuger (8a, 8b) Motoren mit regelbarer Geschwindigkeit sind und daß Mittel vorgesehen sind, die dazu dienen, die Differenz ($\triangle$P) zwischen den Drücken stromaufwärts und stromabwärts der rotierenden Durchflußmesser (6a, 6b) auf einen Wert von etwa Null zu regeln.

3. Vorrichtung nach Anspruch 1, dadurch gekennzeichnet, daß die Drehmomenterzeuger (8a, 8b) Bremsen, z.B. Motorbremsen, sind und daß Mittel vorgesehen sind, die dazu dienen, die Differenz ($\triangle$P) zwischen den Drücken stromaufwärts und stromabwärts der rotierenden Durchflußmesser (6a, 6b) auf einen annähernd konstanten und vorzugsweise niedrigen Wert zu regeln.

4. Vorrichtung nach einem der Ansprüche 1 bis 3, dadurch gekennzeichnet, daß am Eingang jedes Durchflußmessers (6a, 6b) ein Sperrschieber (5a, 5b) montiert ist und daß von der Regelschaltung (9) gesteuerte Mittel vorgesehen sind, die dann, wenn die Geschwindigkeit eines der Durchflußmesser (6a oder 6b) sehr viel größer ist als die des anderen Durchflußmessers (6b oder 6a), den diesem Durchflußmesser (6a oder 6b) zugeordneten Sperrschieber (5a oder 5b) schließen, falls der Gesamtdurchfluß (D) sehr viel größer ist als sein Sollwert (Dr), oder den dem anderen Durchflußmesser (6b oder 6a) zugeordneten Sperrschieber (5b oder 5a) schließen, falls der Gesamtdurchfluß (D) sehr viel kleiner ist als sein Sollwert (Dr).

5. Vorrichtung nach einem der Ansprüche 2 bis 4, dadurch gekennzeichnet, daß die rotierenden Durchflußmesser (6a, 6b) volumetrische Zähler sind und daß die Mittel zur Regelung der Differenz ($\triangle$P) zwischen den Drücken stromaufwärts und stromabwärts der Durchflußmesser (6a, 6b) wenigstens einen ersten Regler umfassen, der ein Regelventil (18A) aufweist, das je nach Bauart der verwendeten Speisepumpe in einem Abzweig oder in Reihe zu dem gemeinsamen Eingang der Durchflußmesser (6a, 6b) montiert ist, sowie einen Differenzdrucksensor (15A), der das Regelventil (18A) steuert.

6. Vorrichtung nach Anspruch 5, dadurch gekennzeichnet, daß die Mittel zur Regelung der Druckdifferenz ferner einen zweiten Regler umfassen, dessen Regelventil (18B) in Reihe zu dem Regelventil (18A) des ersten Reglers montiert ist, sowie einen dritten Regler, dessen Regelventil (18C) parallel zu den Regelventilen (18A, 18B) des ersten und zweiten Reglers montiert ist.

7. Vorrichtung nach Anspruch 6, dadurch gekennzeichnet, daß der erste und der zweite Regler praktisch identische Regelkennlinien (C1 + 2) haben und daß der dritte Regler eine Regelkennlinie (C3) hat, die gegenüber den Kennlinien (C1 + 2) des ersten und zweiten Reglers in Richtung auf die größeren Werte des Differenzdrucks ($\triangle$P) versetzt ist.

8. Vorrichtung nach einem der Ansprüche 5 bis 7, dadurch gekennzeichnet, daß an den beiden Eingängen jedes der Differenzdrucksensoren (15A) zur Erfassung des Differenzdrucks ($\triangle$P) Drosselorgane (16A1, 16A2) montiert sind.

**Claims**

1. A fuel metering device, for example, for gas turbine engines, comprising at least one rotary flowmeter and the means of subjecting its speed of rotation to the control of a command of rate of flow, characterised in that it comprises two rotary flowmeters (6a, 6b) whose fuel lines are fitted in parallel, two tachometers (7a, 7b) and two torque generators (8a, 8b) coupled respectively to the two rotary flowmeters (6a, 6b) and a control circuit (9) of which the inputs receive respectively the signals from the tachometers (7a, 7b) and the command rate (Dr) for the total flow (D) and which is adapted so as to send in parallel to the two torque generators (8a, 8b) a difference signal dependant upon the sum of the speeds of rotation of the two flowmeters (6a, 6b).

2. A device in accordance with Claim 1, characterised in that the torque generators (8a, 8b) are variable speed motors and that a means is provided to regulate to a substantially zero value the difference ($\triangle$P) between the pressures upstream and downstream of the rotary flowmeters (6a, 6b).

3. A device in accordance with Claim 1, characterised in that the torque generators (8a, 8b) are brakes, such as braking motors, and that a means is provided to regulate to a substantially constant value, preferably low, the difference ($\triangle$P) between the pressures upstream and downstream of the rotary flowmeters (6a, 6b).

4. A device in accordance with any of the Claims 1 to 3, characterised in that a stop valve (5a, 5b) is fitted at the inlet to each of the flowmeters (6a, 6b), and that a means, controlled by the control circuit (9) is provided, should the speed of one of the flowmeters (6a or 6b) be very much higher than that of the other, to close the stop valve (5a or 5b) associated with this flowmeter if the total flow (D) is very much higher than its command rate (Dr), or else to close the stop valve (5a or 5b) associated with the other flowmeter (6a or 6b) should the total flow (D) be very much lower than its command rate (Dr).

5. A device in accordance with any of the Claims 2 to 4, characterised in that the rotary flowmeters (6a, 6b) are direct acting meters and that a means of regulating the difference ($\triangle$P) between the pressures upstream and downstream of the flowmeters (6a, 6b) comprising at least one first regulator including a regulating valve (18A) fitted, as a bypass or in series, according to the type of pump used, to the common inlet to the flowmeters (6a, 6b), and a pressure differential sensor (15A), controlling the said regulating valve (18A).

6. A device in accordance with Claim 5, characterised in that the means of regulating the difference in pressure comprises in addition a second regulator, of which the regulating valve (18B) is fitted in series with that (18A) of the first regulator, and a third regulator, of which the regulating valve (18C) is fitted in parallel with those (18A, 18B) of the first and second regulators.

7. A device in accordance with Claim 6, characterised in that the first and second regulators have regulating characteristics (C1 + C2) which are, in practice, identical, and that the third regulator presents a regulatory characteristic (C3) offset towards the highest value of pressure difference ($\triangle P$) in relation to the characteristics (C1 + C2) of the said first and second regulators.

8. A device in accordance with any of the Claims 5 to 7, characterised in that the diaphragm switches (16A1, 16A2) are fitted at the inlets of each pressure differential ($\triangle P$) sensor (15A).

FIG.:1

FIG.:2

FIG.:3